# EUROPEAN PATENT APPLICATION

(11) **EP 1 688 150 A1**
(43) Date of publication of application: **09.08.2006**
(21) Application number: 05388010.0
(22) Date of filing: 08.02.2005
(51) Int. Cl.: A61K 47/48, C08F 8/00, C08G 65/329

(54) **Process for the preparation of alkoxyamine functionalised poly ethylene glycols**

(71) Applicant: NOVO NORDISK A/S, 2880 Bagsvaerd (DK)
(72) Inventor: Dörwald, Florencio Zaragoza, 2765 Smorum (DK)

(57) **Abstract**

A new method for the preparation of alkoxyamine-functionalised PEG is provided.

## Description

### FIELD OF THE INVENTION

The present invention relates to methods of preparing alkoxyamine functionalsed poly ethylene glycol.

### BACKGROUND OF THE INVENTION

A well-known method for conjugation of peptides, e.g. to improve their pharmacological properties, comprises the step reacting an alkoxyamine functionalised poly ethylene glycol (PEG) with a peptide derived aldehyde or ketone to provide a peptide covalently linked to PEG via an oxime bond. For a review, see Roberts, M.J. et. al, Adv. Drug Deliv. Rev. 2002, 54, 459-476, Kinstler, O. et al., Adv. Drug Deliv. Rev. 2002, 54, 477-485.

Alkoxyamine functionalised PEG are normally prepared by treatment of a Boc-(aminoxy)acetyl derivative with a PEG-derived amine, followed by acid mediated removal of the Boc group, as described by Gaertner and Offord, *Bioconjugate Chem.*,7, 38-44, 1996. Most commercially available PEG-derivatives are acylating agents, i.e. carboxylic acid derivatives, and the preparation of PEG-derived alkoxylamine derivatives may require the use of a diamine-spacer, and thus several synthetic operations and purifications of intermediates, as outlined in the Scheme below. Such multistep procedure are tedious and time-consuming, and lower the yield of final product. The monoacylation of a diamine may lower the yield of final product signigicantly, because such reactions usually yield as byproduct a diacylated diamine (Jacobson et al., J. Org. Chem. 1987, 52, 2592).

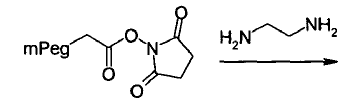

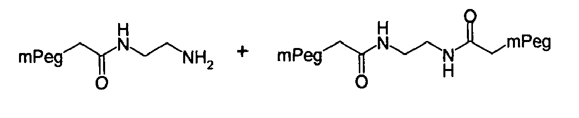

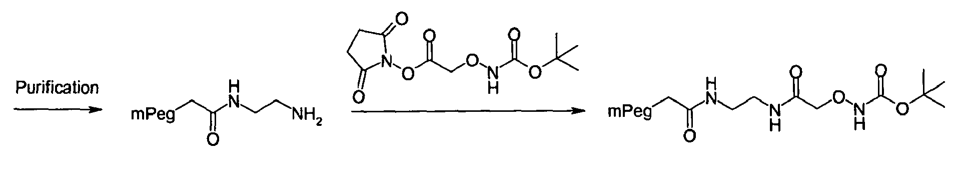

There is thus a need for the provision of simple, fast and efficient methods for the preparation of alkoxyamine functionalised PEG, ideally in one or two synthetic steps.

### SUMMARY OF THE INVENTION

The present inventor has surprisingly found that alkoxyamine functionalised PEG may be prepared in a reaction between an excess of an amine containing a protected alkoxyamine functionality and a readily available, PEG-derived acylating agent, followed by removal of un-reacted amine by means of an acidic ion exchange resin.

Accordingly, the present invention relates to a method for the preparation of compounds accordingly to formula I,

R¹-R²-O-NH₂ (I)

wherein R¹ represents 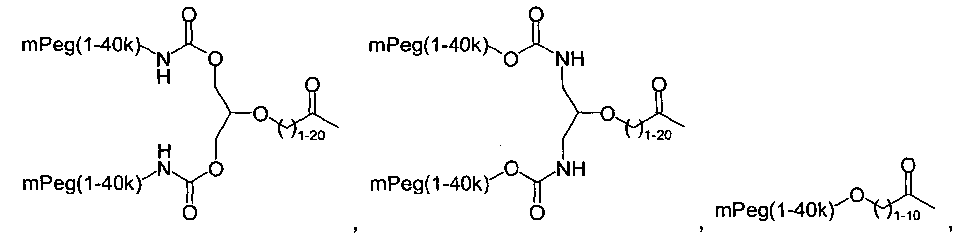 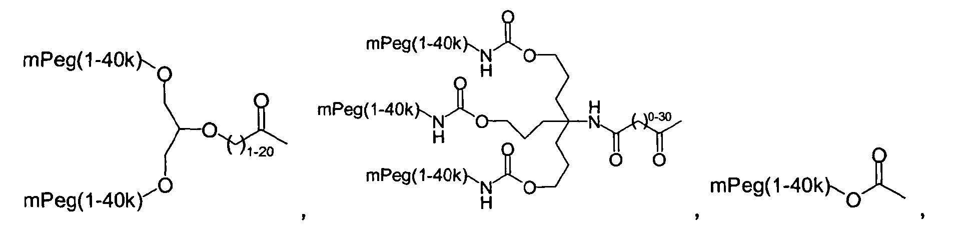 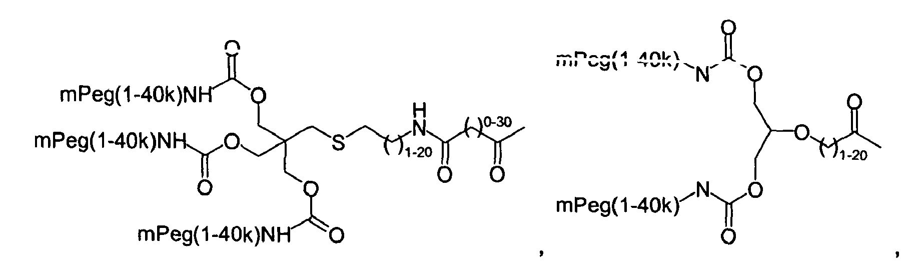 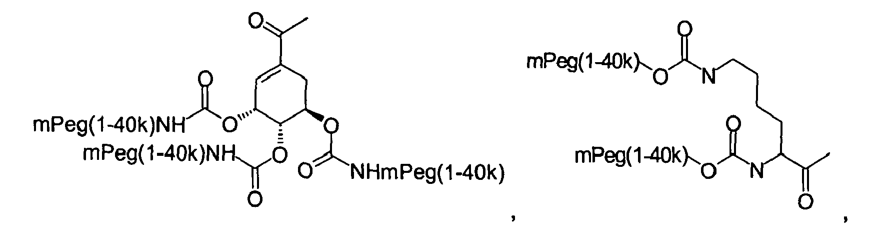 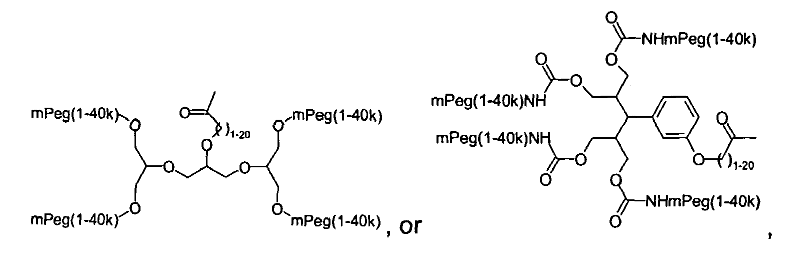 R² represents 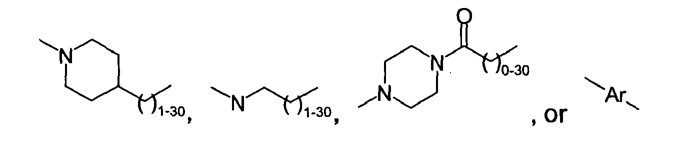 wherein Ar represents arylene or heteroarylene, both of which may optionally be substituted with one or more substituents selected from carboxy, hydroxyl, nitro, or cyano, the method comprising the steps of
(a) treating a compound of formula II

   R¹-LG (II),

   wherein LG represent a leaving group for nucleophilic displacement, with an excess of a compound of the formula (III)

   H-R²-O-NH-Pg (III),

   wherein Pg represents a protective group, in a suitable solvent or solvent mixture, followed by
(b) precipitation of the product obtained in (a) by addition of a large amount of a suitable solvent, in which the compound of formula (IV) is essentially insoluble, and the reaction solvent and the compound of general formula (III) are soluble, wherein the compound of formula (IV) is the compound of formula I with a protection group, i.e.

   R¹-R²-O-NHPg (IV)

   followed by,
(c) isolation of the compound of formula (IV) by filtration, followed by
(d) addition of a suitable solvent in which the compound of formula (IV) is soluble to the product isolated in step (c), followed by
(e) optional repetition of the precipitation, filtration and solubilisation steps of (b) and (c), followed by
(f) addition of a suspension of an acidic ion exchange resin in a suitable solvent, stirring the resulting mixture, followed by filtration and rinsing of the ion exchange resin, and collection and optional concentration of the combined filtrates, followed by
(g) optional addition of a suitable solvent to precipitate the compound of formula (IV), followed by filtration and solubilisation as described in steps (b) and (c), followed by
(h) removal of the protective group with a suitable reagent to obtain a compound of formula I, and optional removal of the solvent and un-reacted reagent.

### DEFINITIONS

The term "aryl" as used herein is intended to indicate carbocyclic aromatic ring systems comprising one or more rings, such as phenyl, biphenylyl, naphthyl, anthracenyl, phenanthrenyl, fluorenyl, indenyl, pentalenyl and azulenyl. Aryl is also intended to include the partially hydrogenated derivatives of the multi-ring carbocyclic systems enumerated above, wherein at least one ring is aromatic. Examples of such partially hydrogenated derivatives include 1,2,3,4-tetrahydronaphthyl and 1,4-dihydronaphthyl. The term "arylene" is intended to indicate the corresponding bi-radical, and examples include 1,2-phenylene, 1,3-phenylene, 1,4-phenylene, 1,2-naphthylene, 1,4-naphthylene, 4,4'-biphenylene, 4,4"-terphenylene and 4,4'''-quaterphenylene.

The term "heteroaryl" as used herein is intended to indicate radicals of heterocyclic aromatic ring systems containing one or more heteroatoms selected from nitrogen, oxygen and sulphur, such as furyl, thienyl, pyrrolyl, oxazolyl, thiazolyl, imidazolyl, isoxazolyl, isothiazolyl, 1,2,3-triazolyl, 1,2,4-triazolyl, pyranyl, pyridyl, pyridazinyl, pyrimidinyl, pyrazinyl, 1,2,3-triazinyl, 1,2,4-triazinyl, 1,3,5- triazinyl, 1,2,3-oxadiazolyl, 1,2,4-oxadiazolyl, 1,2,5-oxadiazolyl, 1,3,4-oxadiazolyl, 1,2,3-thiadiazolyl, 1,2,4-thiadiazolyl, 1,2,5-thiadiazolyl, 1,3,4-thiadiazolyl, tetrazolyl, thiadiazinyl, indolyl, isoindolyl, benzofuryl, benzothienyl, indazolyl, benzimidazolyl, benzthiazolyl, benzisothiazolyl, benzoxazolyl, benzisoxazolyl, purinyl, quinazolinyl, quinolizinyl, quinolinyl, isoquinolinyl, quinoxalinyl, naphthyridinyl, pteridinyl, carbazolyl, azepinyl, diazepinyl, acridinyl and the like. The term is also intended to include partially hydrogenated derivatives of the multi-ring heterocyclic systems enumerated above, provided at least one ring comprising a hetero atom is aromatic. Examples of such partially hydrogenated derivatives include 2,3-dihydrobenzofuranyl, pyrrolinyl, pyrazolinyl, indolinyl, oxazolidinyl, oxazolinyl and oxazepinyl. The term "heteroarylene" is intended to indicate the corresponding bi-radical, and examples include 1,2,4-pyrazol-2,5-diyl, imidazol-1,2-diyl, thiazol-2,4-diyl, (4-phenylimidazole)-4,1'-diyl and (3,5-diphenyl-1,2,4-oxadiazole)-4,4"-diyl.

The term "PEG" is intended to indicate polyethylene glycol of a molecular weight between approximately 100 and approximately 1,000,000 Da, including analogues thereof, wherein for instance the terminal OH-group has been replaced by an alkoxy group, such as e.g. a methoxy group, an ethoxy group or a propoxy group. In particular, the PEG wherein the terminal -OH group has been replaced by methoxy is refered to as mPEG. The term "mPEG" (or more properly "mPEGyl") means a polydisperse or monodisperse radical of the structure 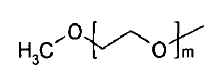 wherein m is an integer larger than 1. Thus, a mPEG wherein m is 90 has a molecular weight of 3991 Da, i.e. approx 4kDa. Likewise, a mPEG with an average molecular weight of 20 kDa has an average m of 454. Due to the process for producing mPEG these molecules often have a distribution of molecular weights. This distribution is described by the polydispersity index.
The term "polydispersity index" as used herein means the ratio between the weight average molecular weight and the number average molecular weight, as known in the art of polymer chemistry (see e.g. "Polymer Synthesis and Characterization", J.A. Nairn, University of Utah, 2003). The polydispersity index is a number which is greater than or equal to one, and it may be estimated from Gel Permeation Chromatographic data. When the polydispersity index is 1, the product is monodisperse and is thus made up of compounds with a single molecular weight. When the polydispersity index is greater than 1 it is a measure of the polydispersity of that polymer, i.e. how broad the distribution of polymers with different molecular weights is. The use of for example "mPEG20000" in formulas, compound names or in molecular structures indicates an mPEG residue wherein mPEG is polydisperse and has a molecular weight of around 20 kDa.

The polydispersity index typically increases with the molecular weight of the PEG or mPEG. When reference is made to 5 kDa PEG and in particular 5 kDa mPEG it is intended to indicate a compound (or in fact a mixture of compounds) with a polydisperisty index below 1.06, such as below 1.05, such as below 1.04, such as below 1.03, such as between 1.02 and 1.03. When reference is made to 10 kDa PEG and in particular 10 kDa mPEG it is intended to indicate a compound (or in fact a mixture of compounds) with a polydisperisty index below 1.06, such as below 1.05, such as below 1.04, such as below 1.03, such as between 1.02 and 1.03. When reference is made to 15 kDa PEG and in particular 15 kDa mPEG it is intended to indicate a compound (or in fact a mixture of compounds) with a polydisperisty index below 1.06, such as below 1.05, such as below 1.04, such as below 1.03, such as between 1.02 and 1.03. When reference is made to 20 kDa PEG and in particular 20 kDa mPEG it is intended to indicate a compound (or in fact a mixture of compounds) with a polydisperisty index below 1.06, such as below 1.05, such as below 1.04, such as below 1.03, such as between 1.02 and 1.03. When reference is made to 30 kDa PEG and in particular 30 kDa mPEG it is intended to indicate a compound (or in fact a mixture of compounds) with a polydisperisty index below 1.06, such as below 1.05, such as below 1.04, such as below 1.03, such as between 1.02 and 1.03. When reference is made to 40 kDa PEG and in particular 40 kDa mPEG it is intended to indicate a compound (or in fact a mixture of compounds) with a polydisperisty index below 1.06, such as below 1.05, such as below 1.04, such as below 1.03, such as between 1.02 and 1.03. When reference is made to 60 kDa PEG and in particular 60 kDa mPEG it is intended to indicate a compound (or in fact a mixture of compounds) with a polydisperisty index below 1.06, such as below 1.05, such as below 1.04, such as below 1.03, such as between 1.02 and 1.03.

### DETAILED DESCRIPTION OF THE INVENTION

The overall reaction of the methods of the present invention may be described by the following reaction sequence 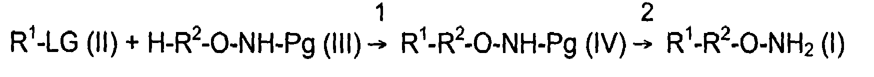 LG in the compound of formula (II) represents a leaving group for nucleophilic displacementand, and examples include halide, azide, N-succinimidyloxy, 1-imidazolyl, 1-triazolyl, 1-tetrazolyl, N-benzotriazolyloxy, N-phthalimidyloxy, phenyloxy, and 4-nitrophenyloxy.

The compound of formula (III) is added is excess over the compound of formula II in order to drive the acylation reaction (reaction 1) to completion in a reasonable time. Typically, the excess is 1.5 - 300 fold, such as 2 -10 fold.

The compounds of formula (III) and (IV) comprise a protecting group, Pg, to protect the amine functionality during the reaction. Typical examples of protecting groups know in the art includes Boc, Fmoc, Cbz, Bpoc, Mpc, Ddz, Adpoc, Azoc, Alloc, and Troc. It is preferred to use protective groups Pg, which enabel final deprotection under mild conditions, which do not harm the final product of the reaction, and furthermore only yield volatile by-products during the deprotection, which are easy to remove, e.g. under reduced pressure. Examples of such Pg include Boc, Cbz and Alloc.

The acylation reaction may be conducted in a suitable solvent, such as dichloromethane, chloroform, tetrachlorocarbon, carbon disulfide, nitrobenzene, acetonitrile, ethyl acetate, propionitrile, chlorobenzene, toluene, or in a solvent mixture, optionally in the presence of a catalyst or a base, such as DIPEA, DMAP, triethylamine, or pyridine to accelerate the reaction. Particular mentioning is made of dichloromethane.

Before removal of the protective group Pg, it is of critical importance to remove the excess amine (of formula (III)), because this compound yields, upon deprotection, an alkoxylamine which will compete with the compound of formula (I) in the condensation reaction with the peptide-derived aldehyde or ketone, leading to low yields of the desired condensation product. The present invention provides a practical method for the removal of amine (III). This method yields highly pure products of general formula (I), and represents a significant improvement compared with the lengthy and tedious procedures reported in the literature. The purity of the products of general formula (I) is essential if high yields of condensation products with peptide-derived aldehydes or ketones are to be obtained.

The removal of the excess of compound (III) from the compound of formula (IV) can be achieved by treatment of a solution of the crude product (IV) in a suitable solvent, such as dichloromethane, chloroform or water, with a sufficient amount of an acidic ion exchange resin, such as Amberlyst 15, Amberlyst 36, Amberjet 1200(H), Amberlite IR-120, Amberlite IRC-50, Amberlite IRP, Dowex 50WX, Dowex HCRW2, Dowex 650C, Dowex DR-2030, or Dowex HCR-S for between 1 min and several hours, e.g. 1, 2, 3, 4, 5, or 10 hours. Particular mentioning is made of dichloromethane as solvent. Filtration, rinsing of the ion exchange resin and concentration or lyophylization of the combined filtrates yields the product (IV), devoid of reagent (III) or other, basic by-products or catalysts.

In addition to the removal of reagent (III) by treatment with an acidic ion exchange resin, intermediate (IV) may be purified by precipitation from diethyl ether, by recrystallization from isopropanol, by ion-exchange chromatography, by dialysis, or by other methods applicable to the purification of PEG-derivatives, well known to those skilled in the art. For each intermediate any of these purification methods may be used. The purified intermediate (IV) can then be subjected to the conditions required for the removal of the protective group Pg and then, after an optional purification, be used for the derivatization of a peptide derived aldehyde or ketone.

The removal of protecting groups is well-known in the art. By way of example, treatment with TFA will remove acid-labile protecting groups such as Boc.

Particular examples of compounds of formula I include 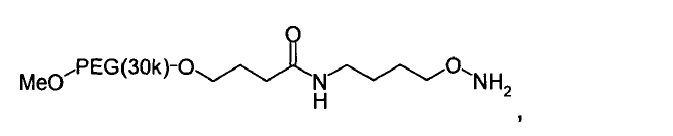 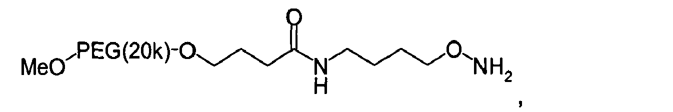 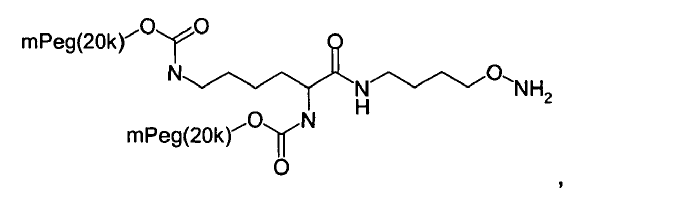 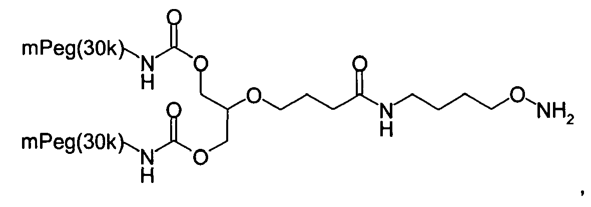 and

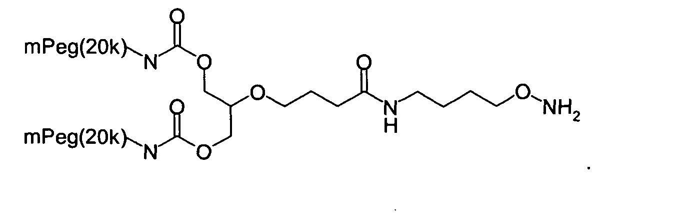

All references, including publications, patent applications, and patents, cited herein are hereby incorporated by reference in their entirety and to the same extent as if each reference were individually and specifically indicated to be incorporated by reference and were set forth in its entirety herein (to the maximum extent permitted by law).
All headings and sub-headings are used herein for convenience only and should not be construed as limiting the invention in any way.

The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

The citation and incorporation of patent documents herein is done for convenience only and does not reflect any view of the validity, patentability, and/or enforceability of such patent documents.

This invention includes all modifications and equivalents of the subject matter recited in the claims appended hereto as permitted by applicable law.

### EXAMPLES

The following abbreviations are used
Boc: tert-butyloxycarbonyl
Fmoc: 9-fluorenylmethyloxycarbonyl
Cbz: benzyloxycarbonyl
Bpoc: 1-(4-biphenylyl)-1-methylethoxycarbonyl
Mpc: 1-(4-methylphenyl)-1-methylethoxycarbonyl
Ddz: 1-(3,5-dimethoxyphenyl)-1-methylethoxycarbonyl
Adpoc: 1-(1-adamantyl)-1-methylethoxycarbonyl
Alloc: allyloxycarbonyl
Troc: 2,2,2-trichloroethyloxycarbonyl
DIPEA: diisopropylethylamine
DMAP: 4-dimethylaminopyridine
TFA: trifluoroacetic acid

The method of the present invention starting from readily available starting materials is depicted in the reaction scheme below.

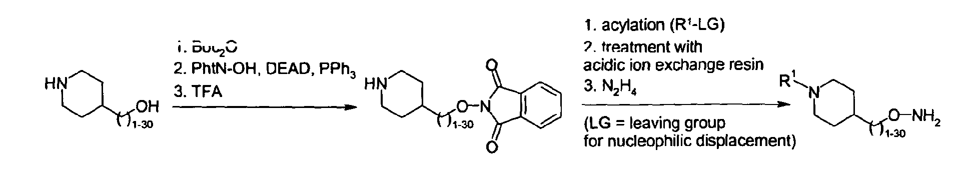

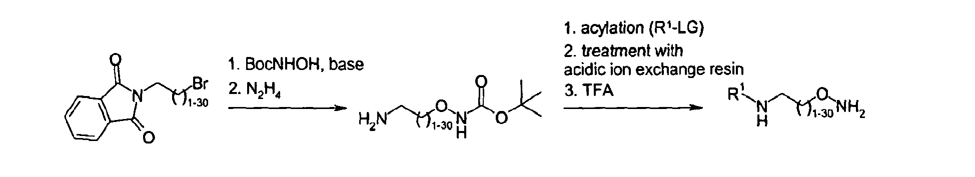

### Example 1:

### O-(4-(4-(1,3-bis(mPEG(20K)oxy)-2-propyloxy)butyrylamino)butyl)hydroxylamine

### (a) N-(tert-Butyloxycarbonylaminoxybutyl)phthalimide

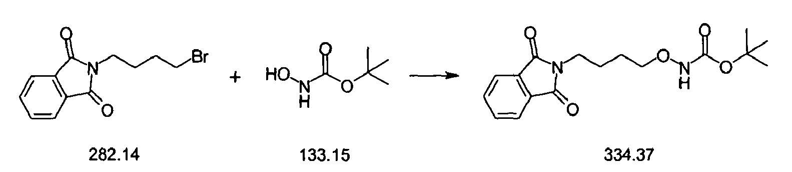

To a stirred mixture of *N*-(4-bromobutyl)phthalimide (18.9 g, 67.0 mmol), MeCN (14 ml), and N-Boc-hydroxylamine (12.7 g, 95.4 mmol) was added DBU (15.0 ml, 101 mmol) in portions. The resulting mixture was stirred at 50 °C for 24 h. Water (300 ml) and 12 M HCl (10 ml) were added, and the product was extracted three times with AcOEt. The combined extracts were washed with brine, dried (MgSO₄), and concentrated under reduced pressure. The resulting oil (28 g) was purified by chromatography (140 g SiO₂, gradient elution with hep-tane/AcOEt). 17.9 g (80%) of the title compound was obtained as an oil. ¹H NMR (DMSO-*d*₆) δ 1.36 (s, 9H), 1.50 (m, 2H), 1.67 (m, 2H), 3.58 (t, *J* = 7 Hz, 2H), 3.68 (t, *J* = 7 Hz, 2H), 7.85 (m, 4H), 9.90 (s, 1H).

### (b) 4-(tert-Butyloxycarbonylaminoxy)butylamine

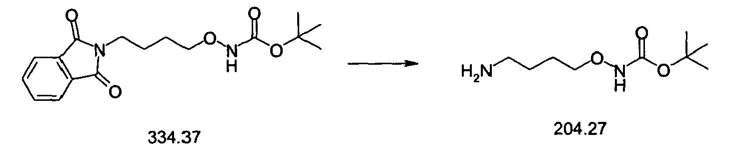

To a solution of *N*-(*tert*-butyloxycarbonylaminoxybutyl)phthalimide obtained from (a) (8.35 g, 25.0 mmol) in EtOH (10 ml) was added hydrazine hydrate (20 ml), and the mixture was stirstirred at 80 °C for 38 h. The mixture was concentrated and the residue coevaporated with EtOH and PhMe. To the residue was added EtOH (50 ml), and the precipitated phthalhydrazide was filtered off and washed with EtOH (50 ml). Concentration of the combined filtrates yielded 5.08 g of an oil. This oil was mixed with a solution of K₂CO₃ (10 g) in water (20 ml), and the product was extracted with CH₂Cl₂. Drying (MgSO₄) and concentration yielded 2.28 g (45%) of the title compound as an oil, which was used without further purification. ¹H NMR (DMSO-*d*₆) δ 1.38 (m, 2H), 1.39 (s, 9H), 1.51 (m, 2H), 2.51 (t, J = 7 Hz, 2H), 3.66 (t, J = 7 Hz, 2H).

### (c) N-Boc-O-(4-(4-(1,3-bis(mPEG(20K)oxy)-2-propyloxy)butyrylamino)butyl)hydroxylamine

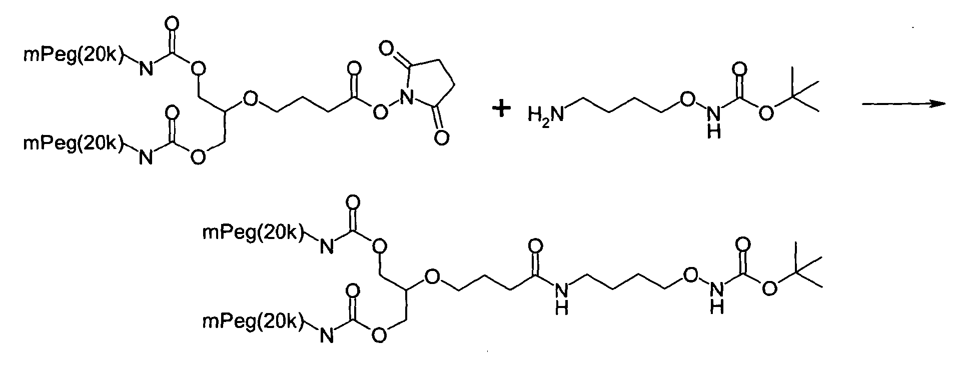

(mPeg-NH-CO-O-CH₂)₂CH-O-(CH₂)₃-CO-OSu (Nektar, 2Z3YOT01, 2.0 g, 50 µmol) was mixed with a solution of 4-(Boc-aminoxy)butylamine (187 mg, 915 µmol) in DCM (12 ml). After stirring at room temperature for 43 h the mixture was added dropwise to stirred Et₂O (200 ml). Filtration, washing with Et₂O. The product was redissolved in DCM (10 ml), and precipitated once more from Et₂O (200 ml). This precipitation was repeated three times. The product was then dissolved in DCM (100 ml) and treated with Amberlyst 15 (11 g; washed with DCM) for 5 min. After filtration and concentration the product was precipitated from Et₂O as above. Filtration and drying under reduced pressure yielded 1.98 g of the title compound as a solid.

### (d) O-(4-(4-(1,3-bis(mPEG(20K)oxy)-2-propyloxy)butyrylamino)butyl)hydroxylamine

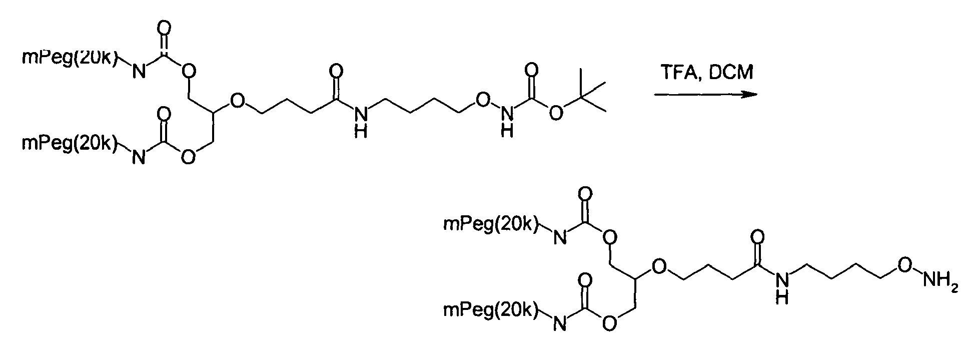

The product from the previous reaction (1.98 g) was dissolved in DCM, and Amberlyst 15 (7.5 g; washed with DCM) was added. After stirring for 5 min the mixture was filtered and the filtrate concentrated. To the residue were added DCM (40 ml) and TFA (40 ml). After standing at room temperature for 0.5 h the mixture was concentrated, the residue coevaporated twice with a mixture of DCM and toluene, and dried under reduced pressure overnight. The residue was dissolved in water (33 ml) and neutralized by addition of 2-methylpyridine (1.5 ml) to pH 5-6. This solution was used directly for the oximation of protein-derived aldehydes.

## Claims

1. A method for the preparation of compounds accordingly to formula I,
R¹-R²-O-NH₂ (I)
wherein R¹ represents 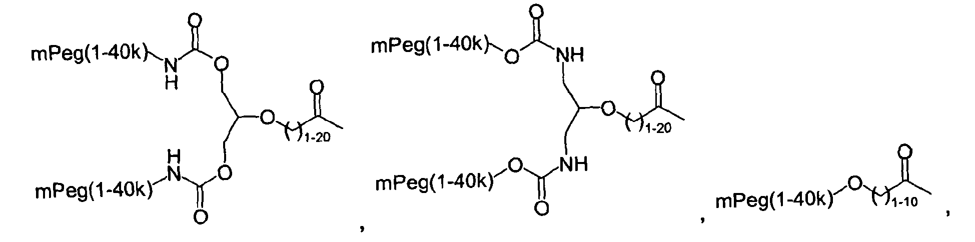 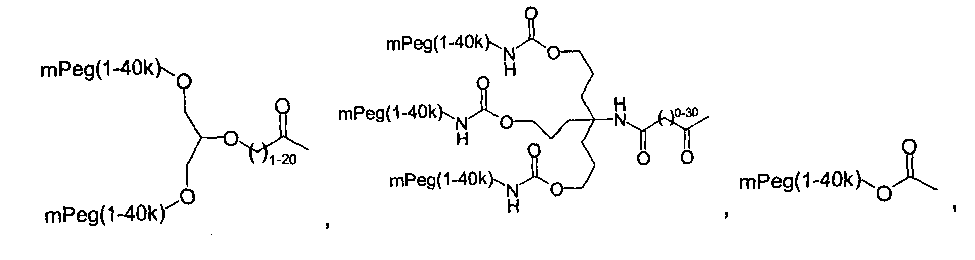 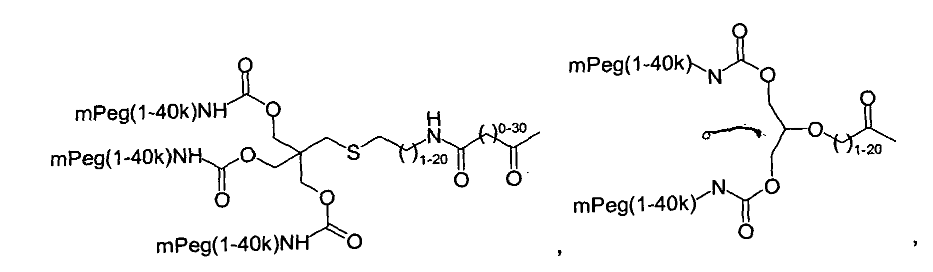 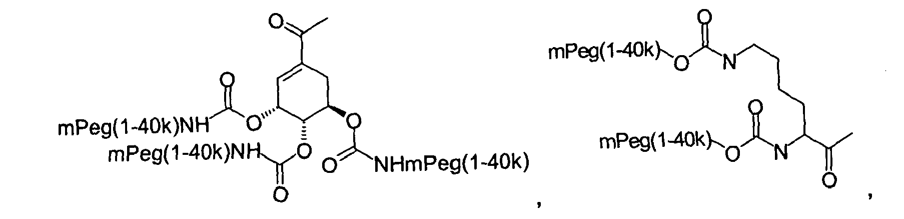 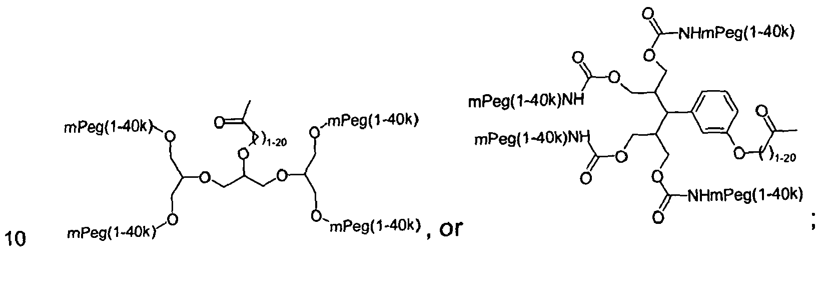 R² represents 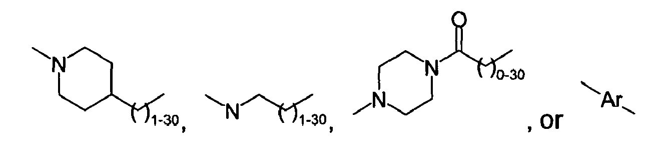 wherein Ar represents arylene or heteroarylene, both of which may optionally be substituted with one or more substituents selected from carboxy, hydroxyl, nitro, or cyano, the method comprising the steps of
(a) treating a compound of formula II
R¹-LG (II),
wherein LG represents a leaving group for nucleophilic displacement, with an excess of a compound of the formula (III)
H-R²-O-NH-Pg (III),
wherein Pg represent a protective group in a suitable solvent or solvent mixture, followed by
(b) precipitation of the product obtained in (a) by addition a large amount of a suitable solvent, in which the compound of formula (IV) is essentially insoluble, and the reaction solvent and the compound of general formula (III) are soluble, wherein the compound of formula IV is the compound of formula I with a protection group, i.e.
R¹-R²-O-NHPg (IV)
followed by,
(c) isolation of the compound of formula (IV) by filtration, followed by
(d) addition of a suitable solvent in which the compound of formula (IV) is soluble to the product isolated in step (c), followed by
(e) optional repetition of the precipitation, filtration and solubilisation steps of (b) and (c), followed by
(f) addition of a suspension of an acidic ion exchange resin in a suitable solvent, stirring the resulting mixture, followed by filtration and rinsing of the ion exchange resin, and collection and optionally concentration of the combined filtrates, followed by
(g) optional addition of a suitable solvent to precipitate the compound of formula (IV), followed by filtration and solubilisation as described in steps (b) and (c), followed by
(h) removal of the protective group with a suitable reagent to obtain a compound of formula I, and optional removal of the solvent and un-reacted reagent.

2. The method according to claim 1, wherein the protective group in the compound of formula (III) is Boc.

3. The method according to any of claims 1 or 2, wherein the solvent in step (a) is dichloromethane.

4. The method according to any of claims 1 to 3, wherein the excess of the compound of formula (III) is 1.5 to 300 fold.

5. The method according to any of claims 1 to 4, wherein the solvent in step (b) is diethylether.

6. The method according to any of claims 1 to 5, wherein the resulting mixture is stirred for 1 min to 10 hours.

7. The method according to any of claims 1 to 6, which further comprises an ion exchange chromatography step.

8. The method according to any of claims 1 to 6, which further comprises a step, wherein compounds are recrystallised from isopropanol.

9. The method according to any of claims 1 to 6, which further comprises a dialysis step.
